# EUROPEAN PATENT APPLICATION

(11) **EP 4 678 507 A1**
(43) Date of publication of application: **14.01.2026**
(21) Application number: 24766278.6
(22) Date of filing: 27.02.2024
(51) Int. Cl.: B62B 3/02, B62B 1/04, B62K 15/00

(54) **COLLAPSIBLE AND PERSON-CARRYING STRUCTURE FOR COLLAPSIBLE WAGON STEERING SYSTEM**

(30) Priority: 06.03.2023 CN 202320389881 U
(71) Applicant: Shenzhen Chepinyi Technology Co., Ltd., Shenzhen, Guangdong 518000 (CN)
(72) Inventor: LUO, Haicheng, Dongguan, Guangdong 523000 (CN)
(74) Representative: Metida
(86) International application number: PCT/CN2024/078680
(87) International publication number: WO 2024/183556

(57) **Abstract**

Disclosed is a collapsible and person-carrying structure for a collapsible wagon steering system, comprising a collapsible frame. A connection device is fixedly connected to the lower end of one side of the collapsible frame; the connection device comprises a frame support base; directional wheels are connected to the bottom of the frame; the directional wheels are connected to a steering structure by means of wheel direction swing arms; the steering structure is collapsible; a directional rod assembly is further connected to the steering structure; and the directional rod assembly is used for controlling motion of the steering structure. By adopting the design, a steering structure composed of a plurality of steering arms is arranged between two directional wheels, steering of the directional wheels is controlled by means of the steering structure, and the steering structure can be switched between an uncollapsed state and a collapsed state so as to adapt to folding of the collapsible frame, such that the present invention is easy to control and practical; and the directional wheels can be replaced with straight-blade fork omnidirectional wheels, such that the traveling stability of a wagon is improved, the use safety is high, and the steering is simpler. The present invention has reasonable design, a simple structure, and low costs.

## Description

### TECHNICAL FIELD

The present disclosure relates to the technical field of carts, and particularly relates to a collapsible and person-carrying structure for collapsible wagon steering system.

### BACKGROUND

As a foldable and towable carrier, a foldable cart is widely applied for carrying objects due to its operational simplicity, carrying capability, storage convenience, and time-saving and labor-saving effects. Now the foldable cart is often used for outdoor activities or short-distance transportation.

Currently, inclined-fork universal wheels are generally used for foldable or unfoldable carts in the prior art to facilitate steering. Due to a special structural design (in which a wheel axis and a rotation axis are not located on a same vertical line), the inclined-fork universal wheel is more convenient and labor-saving than a traditional straight-fork universal wheel (a wheel axis and a rotation axis are located on a same vertical line) in terms of steering. The inclined-fork universal wheel rotates in a direction of force transmission, but similarly, it is more difficult to control the inclined-fork universal wheel with the free steering capability than the straight-fork universal wheel. Especially under load and on an inclined upslope road, the inclined-fork universal wheel rotates in a direction of a sliding force under the influence of the sliding force. In order to prevent the cart from getting out of control in the steering direction, the cart must be manually pulled in an opposite direction, thereby causing inconvenience of use. Moreover, the cart is generally used outdoors. With free movement characteristics, the inclined-fork universal wheel performs steering automatically when pressed by a rugged road surface when the road is rugged and uneven. Although the inclined-fork universal wheel may be straightened by increasing a forward acting force, since the inclined-fork universal wheel is in an inclined swing state due to pressing, an applied force greater than various resistances is required due to a resistance from the rugged road surface, which is more severe in the case of heavy load, thereby greatly affecting use experience of the cart.

Therefore, there is an urgent need to design a collapsible and person-carrying structure for collapsible wagon steering system to overcome one or more deficiencies in the prior art mentioned above.

### SUMMARY

In order to solve the above technical problems, the technical solution employed by the present disclosure is as follows: a collapsible and person-carrying structure for collapsible wagon steering system further includes a foldable frame, the foldable frame is a converging-type frame, steering wheels are connected to a bottom of the foldable frame, and the steering wheels are connected to a steering structure by means of wheel steering swing arms, where the steering structure is foldable, a steering rod assembly is further connected to the steering structure, and the steering rod assembly is configured to control movement of the steering structure.

In a preferred embodiment, a connection device is connected to one side of the foldable frame. The connection device includes a frame support base, and the steering wheels are connected to the frame support base. An end portion of the steering rod assembly is connected to the frame support base.

In a preferred embodiment, the steering structure includes a steering guide rod and steering arms. A plurality of the steering arms are arranged, and the plurality of the steering arms are rotatably connected end to end in sequence. The steering arms located at two ends are rotatably connected to corresponding wheel steering swing arms. One end of the steering guide rod is movably connected to the steering arm located at a middle, and the other end of the steering guide rod is connected to the steering rod assembly.

In a preferred embodiment, a spacing between the two wheel steering swing arms at a same end is less than or greater than a spacing between horizontal rotation axes of the two steering wheels at a same end.

In a preferred embodiment, the steering rod assembly includes steering rod supporting arms and a steering rod. At least two steering rod supporting arms are arranged. The steering rod is located between the two steering rod supporting arms, and a bottom of the steering rod is rotatably connected to the steering rod supporting arms. One end of each of the steering rod supporting arms adjacent to the steering rod is rotatably connected to the steering rod by means of a steering bearing, and one end of each of the steering rod supporting arms away from the steering rod is rotatably connected to the foldable frame.

In a preferred embodiment, a seat plate is connected to an upper end of the foldable frame by means of a seat plate supporting frame, and the seat plate is detachably disposed on the foldable frame.

In a preferred embodiment, the steering rod is connected to the steering bearing. A folding structure is further disposed on the steering rod, and the folding structure is configured to bend the steering rod in a predetermined direction. A pull rod conversion sleeve is further slidably disposed on the steering rod, and the pull rod conversion sleeve is configured to limit folding of the steering rod.

In a preferred embodiment, a pedal is further rotatably connected to one end of the foldable frame provided with the steering rod assembly.

In a preferred embodiment, two ends of the steering arm located in the middle are horizontally rotatably arranged around a center.

In a preferred embodiment, a limiting structure configured to limit a maximum rotation angle of the steering wheel is disposed at one end of the foldable frame connected to the steering wheel.

In a preferred embodiment, the two steering wheels connected to the steering structure are respectively provided with wheel rotation limiting structures cooperating with each other, and the wheel rotation limiting structures are configured to limit rotation of the steering wheels after the foldable frame is folded.

In a preferred embodiment, the wheel rotation limiting structure includes a pin sleeve and a pin. The pin sleeve is disposed on one of the steering wheels, the pin is disposed on the other steering wheel, and the pin sleeve is opposite to the pin.

In a preferred embodiment, one end of the pin sleeve is flared.

Beneficial effects of the present disclosure are as follows: the steering structure composed of a plurality of the steering arms is disposed between two steering wheels, and the steering structure controls steering of the steering wheels. Moreover, the steering structure may be switched between an unfolded state and a folded state to facilitate folding of the foldable frame, such that control is simple, convenient, and practical. With this structure, the steering wheels may be replaced with straight-fork universal wheels, such that operational stability and safety of the cart are enhanced, with simpler steering, a reasonable design, a simple structure, and a low cost.

### BRIEF DESCRIPTION OF THE DRAWINGS

FIG. 1 is a schematic structural diagram of the present disclosure.
FIG. 2 is a schematic structural diagram of a steering structure and a steering rod assembly in the present disclosure.
FIG. 3 is a schematic diagram of a folded state of FIG. 2.
FIG. 4 is a schematic diagram of a steering state of FIG. 2.
FIG. 5 is a schematic diagram of a steering rod in a bent state according to the present disclosure.
FIG. 6 is a schematic diagram of Ackermann steering according to the present disclosure.
FIG. 7 is a schematic sectional diagram of a wheel rotation limiting structure according to the present disclosure.

Reference numerals in the figures:
10. foldable frame, 11. connection device, 111. frame support base, 112. limiting slot, 12. steering wheel, 121. wheel steering swing arm, 13. steering rod assembly, 131. steering rod supporting arm, 132. steering rod, 133. steering bearing, 134. pull rod conversion sleeve, 14. steering structure, 141. steering guide rod, 142. steering arm, 15. seat plate, 151. seat plate supporting frame, 16. pedal, 17. wheel rotation limiting structure, 171. pin sleeve, and 172. pin.

### DETAILED DESCRIPTIONS OF THE EMBODIMENTS

In order to make the above objective, features and advantages of the present disclosure more apparent and understandable, particular embodiments of the present disclosure will be described in detail below in combination with accompanying drawings. Many specific details are set forth in the following description to facilitate full understanding of the present disclosure. However, the present disclosure may be implemented in many other ways different from those described herein. Those skilled in the art may make similar improvements without departing from the connotation of the present disclosure. Therefore, the present disclosure is not limited by the particular embodiments disclosed below.

In descriptions of embodiments of the present disclosure, it should be noted that unless expressly specified otherwise, the terms "connect" and "mount" should be understood in a broad sense. For instance, "connect" can indicate detachable connection or undetachable connection; and can indicate direct connection or indirect connection via an intermediary medium. In addition, "communicate" can indicate direct communication or indirect communication via an intermediary medium. "Fix" refers to mutual connection after which a relative positional relation keeps unchanged. Orientation terms such as "inner", "outer", "top" and "bottom" mentioned in embodiments of the present disclosure are merely directions with reference to accompanying drawings. Thus, orientation terms are used for better and more clearly describing and understanding embodiments of the present disclosure, and do not indicate or imply that the device or element referred to must have a particular orientation, be constructed and operate in a particular orientation, and therefore cannot be construed as limiting embodiments of the present disclosure.

In embodiments of the present disclosure, the terms "first" and "second" are used for descriptive purposes only, and cannot be construed as indicating or implying relative importance or implicitly indicating the number of technical features indicated. Thus, a feature defined with "first" and "second" can explicitly or implicitly include one or more of the features.

In embodiments of the present disclosure, the term "and/or" merely describes an association relation between associated objects, and indicates that there can be three relations. For instance, A and/or B can represent A alone, both A and B, and B alone. Moreover, the character "/" herein generally indicates an "or" relation between the associated objects.

Reference in the description to "an embodiment" or "some embodiments", etc. means that one or more embodiments of the present disclosure include particular features, structures or characteristics described in combination with the embodiments. Thus, the phrases "in an embodiment", "in some embodiments", "in some other embodiments", etc. appearing in difference parts in the description do not all certainly refer to the same embodiment, but mean "one or more but not all embodiments", unless specifically emphasized otherwise. The terms "include", "comprise", "have", and their variations mean "including but not limited to" or "comprising but not limited to", unless specifically emphasized otherwise. Therefore, the present disclosure is not limited by particular embodiments disclosed below.

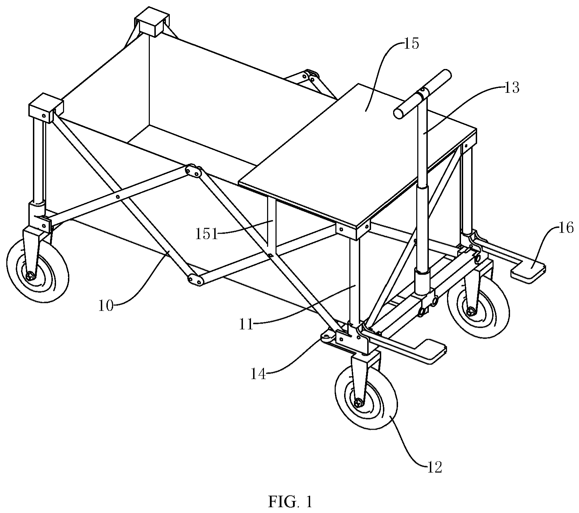

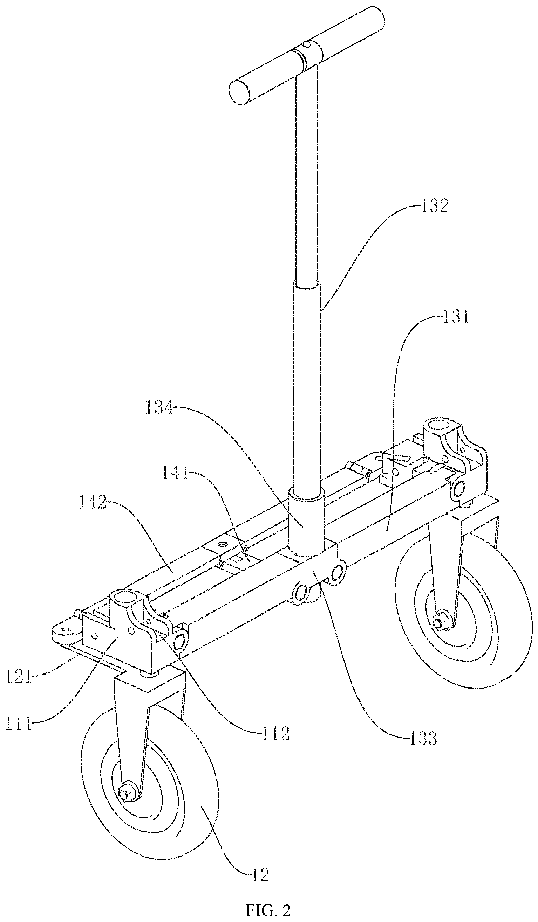

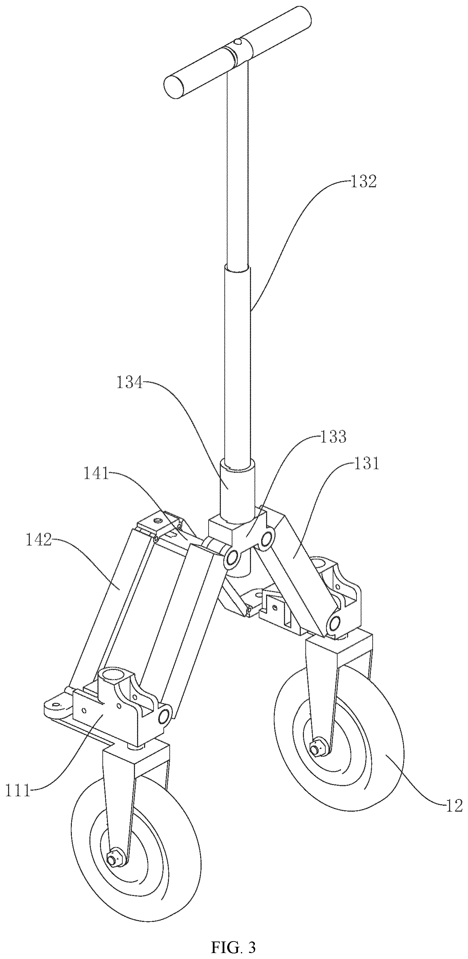

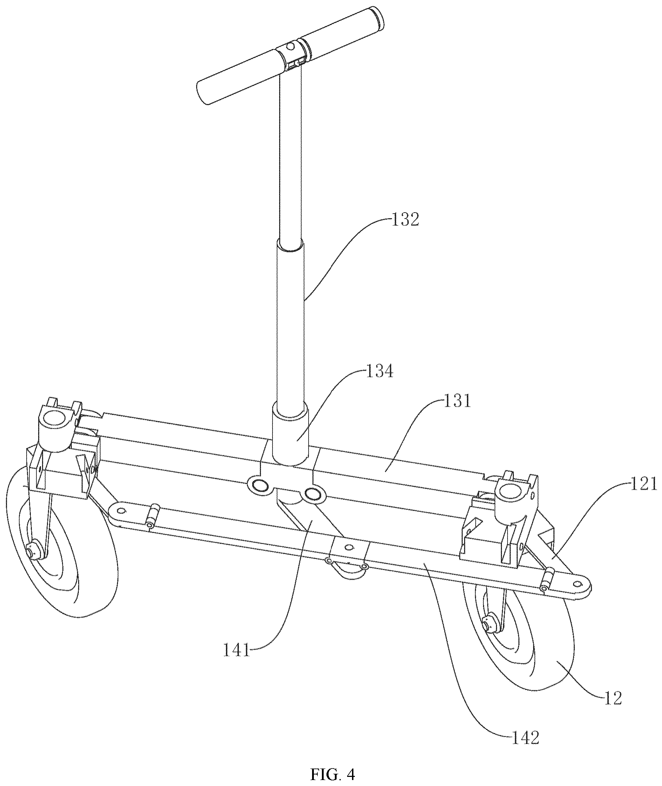

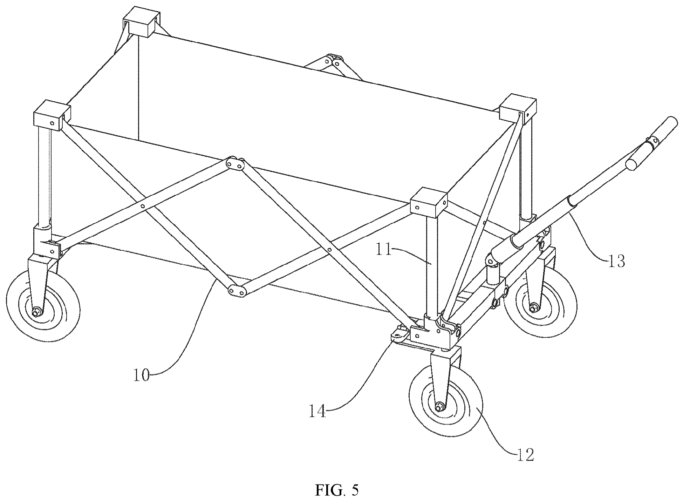

As shown in FIGS. 1-5, the present disclosure provides a collapsible and person-carrying structure for collapsible wagon steering system. The folding and man-riding structure includes a foldable frame 10. Steering wheels 12 are connected to a bottom of the foldable frame 10, and the steering wheels 12 are connected to a steering structure 14 by means of wheel steering swing arms 121. The steering structure 14 is foldable. A steering rod assembly 13 is further connected to the steering structure 14, and the steering rod assembly 13 is configured to control movement of the steering structure 14.

Specifically, the foldable frame 10 is a converging-type vehicle body, and a converged type means that a middle arches upwards, and front, rear, left and right portions converge towards the middle to be folded. The converging-type vehicle body in the folded state occupies less space than other types of foldable frames 10. The foldable frame 10 is provided with four connection devices 11, and the four connection devices 11 delimit a rectangle. Each of the connection devices 11 includes a frame support base 111, and the frame support base 111 is configured to be connected to a frame. Steering wheels 12 are disposed below each of the frame support bases 111, and a wheel steering swing arm 121 is disposed at a top of each of the steering wheels 12. A steering structure 14 is connected between two wheel steering swing arms 121 at the same end, and the steering structure 14 is configured to control rotation of the steering wheels 12. A steering rod assembly 13 is further connected to the steering structure 14, the steering rod assembly 13 horizontally rotates relative to the foldable frame 10, and the steering rod assembly 13 is configured to control movement of the steering structure 14. When rotating, the steering rod assembly 13 drives the steering structure 14 to swing left and right, and the steering structure 14 drives the steering wheels 12 to rotate left and right, such that rotation of the steering wheels 12 is controlled.

It should be noted that since the steering wheels 12 are connected together by means of the steering structure 14, the steering wheels are driven by the steering structure 14 to rotate. Therefore, the steering wheels 12 may be straight-fork universal wheels, which are more stable than inclined-fork universal wheels in a running process. The straight-fork universal wheels cannot freely rotate, and rotate only when receiving a force in a specific direction, such that use safety is enhanced. Moreover, under the condition of a heavy load, steering of the straight-fork universal wheels is easier. Steering wheels 12 at front ends of the straight-fork universal wheels may horizontally rotate, but steering wheels 12 at rear ends are fixed and cannot horizontally rotate.

Further, the steering structure 14 includes a steering guide rod 141 and steering arms 142. A plurality of the steering arms 142 are arranged, and the plurality of the steering arms 142 are rotatably connected end to end in sequence. One end of the steering guide rod 141 is movably connected to the steering arm 142 located at a middle, and the other end of the steering guide rod 141 is connected to the steering rod assembly 13.

Specifically, the steering structure 14 includes a steering guide rod 141 and a plurality of steering arms 142. The plurality of the steering arms 142 are rotatably connected end to end in sequence such that the plurality of the steering arms 142 may mutually rotate for folding, to facilitate folding of the foldable frame 10. One end of the steering guide rod 141 is rotatably connected to the steering arm 142 located in a middle, and the other end of the steering guide rod 141 is fixedly connected to the steering rod assembly 13. When the steering rod assembly 13 rotates, the steering guide rod 141 is driven to swing, and the steering guide rod 141 swings to drive the steering arm 142 to move left and right, so as to drive the steering wheel 12 connected to the steering arm 142 to rotate left and right to control steering. Preferably, the number of the steering arms 142 is preferably five, two steering arms 142 at two ends are equal in length, and two steering arms 142 connected to the two ends are equal in length, such that the steering arm 142 is in a "Ji" (Chinese character " 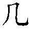 ") shape when folded.

It should be noted that a rotation center of the steering guide rod 141 and a rotation center of the steering wheel 12 are located on the same straight line. With the structure, it is not required to arrange a sliding groove on the steering guide rod 141. Otherwise, since a movement trajectory of the steering guide rod 141 is arc-shaped and the steering arm 142 moves in a straight line, it is required to arrange a sliding groove on the steering guide rod 141, so as to prevent failure of rotation due to a movement conflict.

Further, a spacing between the two wheel steering swing arms 121 at a same end is less than or greater than a spacing between horizontal rotation axes of the two steering wheels 12 at a same end.

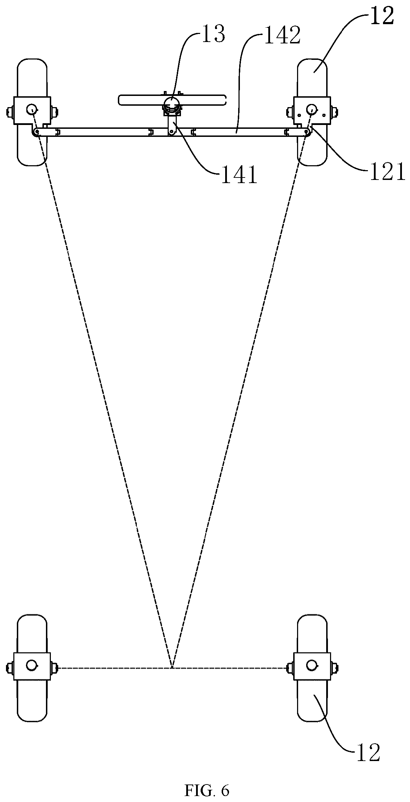

Specifically, as shown in FIG. 6, in order to prevent tire abrasion caused by the same angle of the two steering wheels 12 during steering, junctions where a steering arm 142 located on a leftmost side and a steering arm 142 located on a rightmost side are connected to corresponding wheel steering swing arms 121 are disposed on a straight line between a horizontal rotation axis of two steering wheels 12 at a front end and an interval center of two steering wheels 12 at a rear end. Therefore, during steering of the two front steering wheels 12, an extension line of a vertical rotation axis of the steering wheel 12 intersects with an extension line of a vertical rotation axis of the steering wheel 12 at the rear end at a point, such that the Ackermann steering principle is implemented, and tire abrasion during steering is reduced.

It should be noted that the spacing between the two wheel steering swing arms 121 is less than or greater than the spacing between the horizontal rotation axes of the two steering wheels at the same end according to a structure shown in FIG. 6. In this way, the Ackermann steering effect may be fully achieved and is optimal. When the spacing between the two wheel steering swing arms 121 is greater than the spacing between the horizontal rotation axes of the two steering wheels at the same end, the Ackermann steering effect may still be achieved but is not optimal.

Further, the steering rod assembly 13 includes steering rod supporting arms 131 and a steering rod 132. At least two steering rod supporting arms 131 are arranged. The steering rod 132 is located between the two steering rod supporting arms 131, and a bottom of the steering rod is rotatably connected to the steering rod supporting arms 131. One end of each of the steering rod supporting arms 131 adjacent to the steering rod 132 is rotatably connected to the steering rod 132 by means of a steering bearing 133, and one end of each of the steering rod supporting arms 131 away from the steering rod 132 is rotatably connected to the foldable frame 10.

Specifically, the steering rod assembly 13 includes steering rod supporting arms 131. Two steering rod supporting arms 131 are arranged. One end of each of the steering rod supporting arms 131 is rotatably connected to a frame support base 111 and may vertically rotate relative to the frame support base 111. The two steering rod supporting arms 131 are arranged opposite to each other. The steering rod 132 is disposed between the two steering rod supporting arms 131, and the steering rod 132 is connected to the steering rod supporting arms 131 by means of steering bearings 133 such that the steering rod supporting arms 131 rotate relative to the steering rod 132. To fold the foldable frame 10 as needed, the steering rod 132 is pulled first to drive the steering rod supporting arm 131 to be switched from a horizontal shape to an inclined shape with a certain angle, and in this case, the foldable frame 10 is folded. When the foldable frame 10 is folded, a spacing between two sides is narrowed, and the steering rod supporting arms 131 are pressed. The steering rod supporting arms 131 are pressed and pushed up to be switched from an inclined shape to a vertical shape, which drives the steering rod 132 to rise. Rise of the steering rod 132 synchronously drives the steering structure 14 to arch up by means of the steering guide rod 141, such that the foldable frame 10 is folded. When the foldable frame 10 is unfolded, the two steering rod supporting arms 131 are pulled by the foldable frame 10 to keep horizontal such that the steering rod 132 is prevented from moving up and down in use.

It should be noted that a bump (not shown in the figures) horizontally extending is disposed on a bottom side of one end of either of the two steering rod supporting arms 131 away from the steering rod 132. When the two steering rod supporting arms 131 are horizontal, the bumps are in contact with a connection seat of the foldable frame 10 and abut against the connection seat, such that the steering rod supporting arms 131 are prevented from sinking. Moreover, acting forces applied to junctions between the steering rod supporting arms 131 and the steering bearings 133 may be shared.

Further, in this embodiment, a seat plate 15 is connected to an upper end of the foldable frame 10 by means of a seat plate supporting frame 151, and the seat plate 15 is detachably disposed on the foldable frame 10. Specifically, the seat plate 1 is detachably disposed on the foldable frame 10, such that when the seat plate 15 is not required, the seat plate 15 may be removed to prevent affecting cargo loading or folding of the foldable frame 10.

Further, the steering rod 132 is connected to the steering bearing 133. A folding structure is further disposed on the steering rod 132, and the folding structure is configured to bend the steering rod 132 in a predetermined direction. A pull rod conversion sleeve 134 is further slidably disposed on the steering rod 132, and the pull rod conversion sleeve 134 is configured to limit folding of the steering rod 132.

Specifically, the steering rod 132 is inserted into the steering bearing 133 and may horizontally rotate relative to the steering bearing 133 to drive the steering guide rod 141 to swing left and right. A folding structure is disposed at the steering rod 132 located above the steering bearing 133. Through the folding structure, the steering rod 132 may vertically rotate relative to the steering bearing 133, such that the steering rod 132 is inclined for convenience of towing. A pull rod conversion sleeve 134 is movably sleeved on the steering rod 132, and the pull rod conversion sleeve 134 is configured to limit vertical rotation of the steering rod 132. When the pull rod conversion sleeve 134 covers the folding structure, the steering rod 132 is limited by the pull rod conversion sleeve 134. That is, the steering rod cannot vertically rotate by means of the folding structure. When the steering rod 132 is required to vertically rotate, it is only necessary to move the pull rod conversion sleeve 134 to an area beyond a range of the folding structure.

It should be noted that a junction between the steering bearing 133 and the steering rod supporting arm 131 is located at the bottom thereof, which limits the inclination of the steering bearing 133 (such inclination may cause the steering rod 132 to be inclined) to a certain extent when the two steering rod supporting arms 131 are folded.

Further, in this embodiment, a pedal 16 is further rotatably connected to one end of the foldable frame 10 provided with the steering rod assembly 13.

Specifically, in order to improve riding comfort of a user, a limiting slot 112 is formed on the frame support base 111, and the pedal 16 is rotatably connected in the limiting slot 112. When in use, the pedal 16 may be turned down to be horizontal such that the user may place feet on the pedal 1 during riding. When not in use, the pedal may be rotatably folded on the foldable frame 10. Two pedals 16 are arranged, and one pedal is disposed on either side.

Further, in this embodiment, two ends of the steering arm 142 located in the middle are horizontally rotatably arranged around a center.

Specifically, two ends of the steering arm 142 located in the middle are configured to horizontally rotate along the middle, such that when the steering rod 132 rotates, the situation of unsmooth rotation due to a movement conflict may be prevented. Moreover, according to the Ackermann steering principle, the structure ensures that the situation that the Ackermann steering effect cannot be normally exerted because interference occurs to the steering arm 142 and the steering guide rod 141 due to different steering angles of the steering wheels 12 during steering of the two steering wheels 12, is prevented.

Further, a limiting structure configured to limit a maximum rotation angle of the steering wheel 12 is disposed at one end of the foldable frame 10 connected to the steering wheel 12.

Specifically, in order to prevent the situation that the two steering wheels 12 cannot smoothly return after being driven by the steering arm 142 to rotate to a maximum angle, a limiting structure (not shown in the figures) is further disposed on a bottom surface of the frame support base 111 or the steering wheel 12. The limiting structure is configured to cooperate with the steering arm 142 or the wheel steering swing arms 121 to limit further rotation after the steering wheel 12 rotates to a certain angle, thereby avoiding the situation that the steering wheel 12 cannot return due to an excessive rotation angle.

Further, in this embodiment, the two steering wheels 12 connected to the steering structure 14 are respectively provided with wheel rotation limiting structures 17 cooperating with each other, and the wheel rotation limiting structures 17 are configured to limit rotation of the steering wheels 12 after the foldable frame 10 is folded.

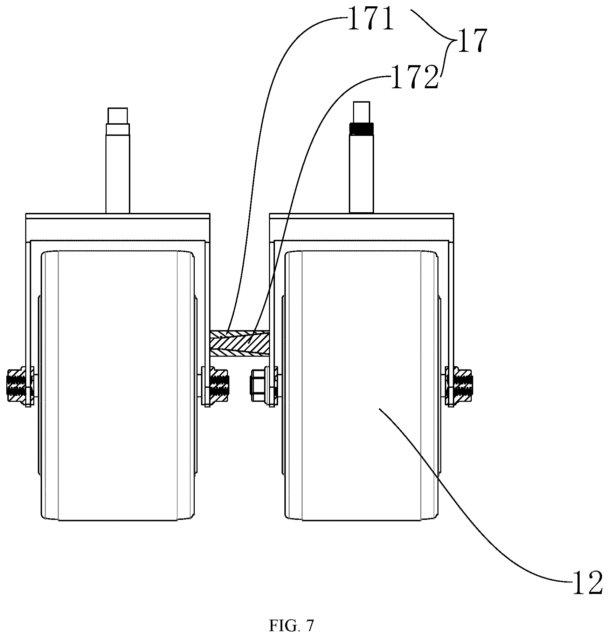

Specifically, since the steering wheels 12 are not limited after the foldable vehicle body 10 is folded, possible movement causes the steering wheels 12 to rotate. In this case, although the steering structure 14 limits excessive rotation of the steering wheels 12 to a certain extent, complete limitation cannot be achieved. When rotating, the steering wheels 12 drive the steering structure 14 to move. The movement is performed after folding and likely to damage the steering structure 14. In order to avoid the situation, as shown in FIG. 7, the two steering wheels 12 connected to the steering structure 14 are respectively provided with wheel rotation limiting structures 17 cooperating with each other. The wheel rotation limiting structures 17 cooperate with each other after the two steering wheels 12 are close to each other. The wheel rotation limiting structures 17 limit free rotation of the steering wheels 12 after folding, such that the steering structure 14 is prevented from being damaged.

Further, the wheel rotation limiting structure 17 includes a pin sleeve 171 and a pin 172. The pin sleeve 171 is disposed on one of the steering wheels 12, the pin 172 is disposed on the other steering wheel 12, and the pin sleeve 171 is opposite to the pin 172.

Specifically, the pin sleeve 171 is disposed on one of the steering wheels 12 in a fixation or limited rotation manner, and the pin 172 is disposed on the other steering wheel 12 in a fixation or limited rotation manner. After the two steering wheels 12 are close to each other, the pin 172 is inserted into the pin sleeve 171, such that rotation of the two steering wheels 12 is limited through cooperation between the pin sleeve 171 and the pin 172. The folded vehicle body is bound by a strap. Under the constraint of the strap, the pin sleeve 171 and the pin 172 on the steering wheel are tightly interlocked in an insertion manner, thereby preventing disengagement from each other. Towing may be implemented through cooperation between the pin sleeve 171 and the pin 172, such that convenience is enhanced.

Further, one end of the pin sleeve 171 is flared.

Specifically, in order to improve smoothness of cooperation between the pin sleeve 171 and the pin 172, one end of the pin sleeve 171 facing the pin 172 is flared. Through the flared design, convenience of inserting the pin 172 into the pin sleeve 171 is improved.

In summary, according to the present disclosure, the steering structure 14 composed of a plurality of the steering arms 142 is disposed between two steering wheels 12, and the steering structure 14 controls steering of the steering wheels 12. Moreover, the steering structure 14 may be switched between an unfolded state and a folded state to facilitate folding of the foldable frame 10, such that control is simple, convenient and practical. With this structure, the steering wheels 12 may be replaced with straight-fork universal wheels, such that operational stability and safety of the cart are enhanced, with simpler steering, a reasonable design, a simple structure, and a low cost.

The present disclosure is not only limited to the descriptions in the description and embodiments, such that those skilled in the art may easily achieve additional advantages and modifications. Therefore, the present disclosure is not limited to specific details, representative apparatus and illustrative instances shown and described herein without departing from the spirit and scope of the general concept as defined by the claims and their equivalents.

## Claims

1. A collapsible and person-carrying structure for collapsible wagon steering system, comprising a foldable frame, steering wheels are connected to a bottom of the foldable frame, the steering wheels are connected to a steering structure by means of wheel steering swing arms, the steering structure is foldable, a steering rod assembly is further connected to the steering structure, and the steering rod assembly is configured to control movement of the steering structure.

2. The collapsible and person-carrying structure for collapsible wagon steering system according to claim 1, wherein a connection device is connected to one side of the foldable frame, the connection device comprises a frame support base, the steering wheels are connected to the frame support base, and an end portion of the steering rod assembly is connected to the frame support base.

3. The collapsible and person-carrying structure for collapsible wagon steering system according to claim 1, wherein the steering structure comprises a steering guide rod and steering arms, a plurality of the steering arms are arranged, the plurality of the steering arms are rotatably connected end to end in sequence, the steering arms located at two ends are rotatably connected to corresponding wheel steering swing arms, one end of the steering guide rod is movably connected to the steering arm located at a middle, and the other end of the steering guide rod is connected to the steering rod assembly.

4. The collapsible and person-carrying structure for collapsible wagon steering system according to claim 3, wherein a spacing between the two wheel steering swing arms at a same end is less than or greater than a spacing between horizontal rotation axes of the two steering wheels at a same end.

5. The collapsible and person-carrying structure for collapsible wagon steering system according to claim 3, wherein the steering rod assembly comprises steering rod supporting arms and a steering rod, at least two steering rod supporting arms are arranged, the steering rod is located between the two steering rod supporting arms, a bottom of the steering rod is rotatably connected to the steering rod supporting arms, one end of each of the steering rod supporting arms adjacent to the steering rod is rotatably connected to the steering rod by means of a steering bearing, and one end of each of the steering rod supporting arms away from the steering rod is rotatably connected to the foldable frame.

6. The collapsible and person-carrying structure for collapsible wagon steering system according to claim 1, wherein a seat plate is connected to an upper end of the foldable frame by means of a seat plate supporting frame, and the seat plate is detachably disposed on the foldable frame.

7. The collapsible and person-carrying structure for collapsible wagon steering system according to claim 5, wherein the steering rod is connected to the steering bearing, a folding structure is further disposed on the steering rod, the folding structure is configured to bend the steering rod in a predetermined direction, a pull rod conversion sleeve is further slidably disposed on the steering rod, and the pull rod conversion sleeve is configured to limit folding of the steering rod.

8. The collapsible and person-carrying structure for collapsible wagon steering system according to claim 1, wherein a pedal is further rotatably connected to one end of the foldable frame provided with the steering rod assembly.

9. The collapsible and person-carrying structure for collapsible wagon steering system according to claim 3, wherein two ends of the steering arm located in the middle are horizontally rotatably arranged around a center.

10. The collapsible and person-carrying structure for collapsible wagon steering system according to claim 1, wherein a limiting structure configured to limit a maximum rotation angle of the steering wheel is disposed at one end of the foldable frame connected to the steering wheel.

11. The collapsible and person-carrying structure for collapsible wagon steering system according to claim 1, wherein the two steering wheels connected to the steering structure are respectively provided with wheel rotation limiting structures cooperating with each other, and the wheel rotation limiting structures are configured to limit rotation of the steering wheels after the foldable frame is folded.

12. The collapsible and person-carrying structure for collapsible wagon steering system according to claim 11, wherein the wheel rotation limiting structure comprises a pin sleeve and a pin, the pin sleeve is disposed on one of the steering wheels, the pin is disposed on the other steering wheel, and the pin sleeve is opposite to the pin.

13. The collapsible and person-carrying structure for collapsible wagon steering system according to claim 12, wherein one end of the pin sleeve is flared.

## Amended claims

### Amended claims under Art. 19.1 PCT

1. A folding and man-riding structure of a foldable cart steering system, comprising a foldable frame, wherein the foldable frame is a converging-type frame, steering wheels are connected to a bottom of the foldable frame, the steering wheels are connected to a steering structure by means of wheel steering swing arms, the steering structure is foldable, a steering rod assembly is further connected to the steering structure, and the steering rod assembly is configured to control movement of the steering structure.

2. The folding and man-riding structure of a foldable cart steering system according to claim 1, wherein a connection device is connected to one side of the foldable frame, the connection device comprises a frame support base, the steering wheels are connected to the frame support base, and an end portion of the steering rod assembly is connected to the frame support base.

3. The folding and man-riding structure of a foldable cart steering system according to claim 1, wherein the steering structure comprises a steering guide rod and steering arms, a plurality of the steering arms are arranged, the plurality of the steering arms are rotatably connected end to end in sequence, the steering arms located at two ends are rotatably connected to corresponding wheel steering swing arms, one end of the steering guide rod is movably connected to the steering arm located at a middle, and the other end of the steering guide rod is connected to the steering rod assembly.

4. The folding and man-riding structure of a foldable cart steering system according to claim 3, wherein a spacing between the two wheel steering swing arms at a same end is less than or greater than a spacing between horizontal rotation axes of the two steering wheels at a same end.

5. The folding and man-riding structure of a foldable cart steering system according to claim 3, wherein the steering rod assembly comprises steering rod supporting arms and a steering rod, at least two steering rod supporting arms are arranged, the steering rod is located between the two steering rod supporting arms, a bottom of the steering rod is rotatably connected to the steering rod supporting arms, one end of each of the steering rod supporting arms adjacent to the steering rod is rotatably connected to the steering rod by means of a steering bearing, and one end of each of the steering rod supporting arms away from the steering rod is rotatably connected to the foldable frame.

6. The folding and man-riding structure of a foldable cart steering system according to claim 1, wherein a seat plate is connected to an upper end of the foldable frame by means of a seat plate supporting frame, and the seat plate is detachably disposed on the foldable frame.

7. The folding and man-riding structure of a foldable cart steering system according to claim 5, wherein the steering rod is connected to the steering bearing, a folding structure is further disposed on the steering rod, the folding structure is configured to bend the steering rod in a predetermined direction, a pull rod conversion sleeve is further slidably disposed on the steering rod, and the pull rod conversion sleeve is configured to limit folding of the steering rod.

8. The folding and man-riding structure of a foldable cart steering system according to claim 1, wherein a pedal is further rotatably connected to one end of the foldable frame provided with the steering rod assembly.

9. The folding and man-riding structure of a foldable cart steering system according to claim 3, wherein two ends of the steering arm located in the middle are horizontally rotatably arranged around a center.

10. The folding and man-riding structure of a foldable cart steering system according to claim 1, wherein a limiting structure configured to limit a maximum rotation angle of the steering wheel is disposed at one end of the foldable frame connected to the steering wheel.

11. The folding and man-riding structure of a foldable cart steering system according to claim 1, wherein the two steering wheels connected to the steering structure are respectively provided with wheel rotation limiting structures cooperating with each other, and the wheel rotation limiting structures are configured to limit rotation of the steering wheels after the foldable frame is folded.

12. The folding and man-riding structure of a foldable cart steering system according to claim 11, wherein the wheel rotation limiting structure comprises a pin sleeve and a pin, the pin sleeve is disposed on one of the steering wheels, the pin is disposed on the other steering wheel, and the pin sleeve is opposite to the pin.

13. The folding and man-riding structure of a foldable cart steering system according to claim 12, wherein one end of the pin sleeve is flared.
